Europäisches Patentamt

European Patent Office

Office européen des brevets

(19)

(11)  EP 0 846 274 B1

(12)   **FASCICULE DE BREVET EUROPEEN**

| | |
|---|---|
| (45) Date de publication et mention de la délivrance du brevet:<br>**11.09.2002  Bulletin 2002/37** | (51) Int Cl.[7]: **G01S 17/50**, G01P 5/00 |
| (21) Numéro de dépôt: **97930575.2** | (86) Numéro de dépôt international:<br>**PCT/FR97/01122** |
| (22) Date de dépôt: **24.06.1997** | (87) Numéro de publication internationale:<br>**WO 97/050004 (31.12.1997 Gazette 1997/57)** |

(54)  **SONDE VELOCIMETRIQUE OPTIQUE**

OPTISCHER GESCHWINDIGKEITSSENSOR

OPTICAL VELOCIMETRY SENSOR

| | |
|---|---|
| (84) Etats contractants désignés:<br>**DE GB** | (56) Documents cités:<br>**EP-A- 0 012 396   EP-A- 0 489 474**<br>**US-A- 3 547 540   US-A- 3 825 346**<br>**US-A- 4 610 540   US-A- 4 925 297**<br>**US-A- 5 006 813   US-A- 5 164 784**<br>**US-A- 5 502 558** |
| (30) Priorité:  **25.06.1996  FR 9607857** | |
| (43) Date de publication de la demande:<br>**10.06.1998  Bulletin 1998/24** | • **MOCKER H W ET AL: "LASER DOPPLER OPTICAL AIR-DATA SYSTEM: FEASIBILITY DEMONSTRATION AND SYSTEMS SPECIFICATIONS" APPLIED OPTICS, vol. 33, no. 27, 20 septembre 1994, pages 6457-6471, XP000469295** |
| (73) Titulaire: **THALES AVIONICS S.A.**<br>**78141 Vélizy Villacoublay Cédex (FR)** | |
| (72) Inventeur: **BREDA, Jean-Marc**<br>**Thomson-CSF S.C.P.I.**<br>**F-94117 Arcueil Cedex (FR)** | |
| (74) Mandataire: **Guérin, Michel et al**<br>**Thomson-CSF Propriété Intellectuelle,**<br>**13, Avenue du Président Salvador Allende**<br>**94117 Arcueil Cédex (FR)** | |

EP 0 846 274 B1

**Description**

Le domaine de l'invention est celui des sondes vélocimétriques optiques permettant de définir la vitesse de particules en mouvement relatif par rapport à la sonde.

Il existe à l'heure actuelle différents dispositifs optiques permettant de mesurer optiquement la vitesse de particules de petites dimensions (typiquement inférieures au micron).

On peut à ce titre utiliser des sondes fonctionnant sur le principe de l'effet Doppler longitudinal. Une source de lumière envoie un faisceau sur une particule, et on analyse la lumière rétrodiffusée, la vitesse de cette particule confère à l'énergie rétrodiffusée une variation de fréquence par rapport à la fréquence du rayonnement incident. Pour obtenir une mesure significative, il est indispensable de disposer de source dont la longueur d'onde est parfaitement connue pour déterminer une variation précise par rapport à ladite longueur d'onde.

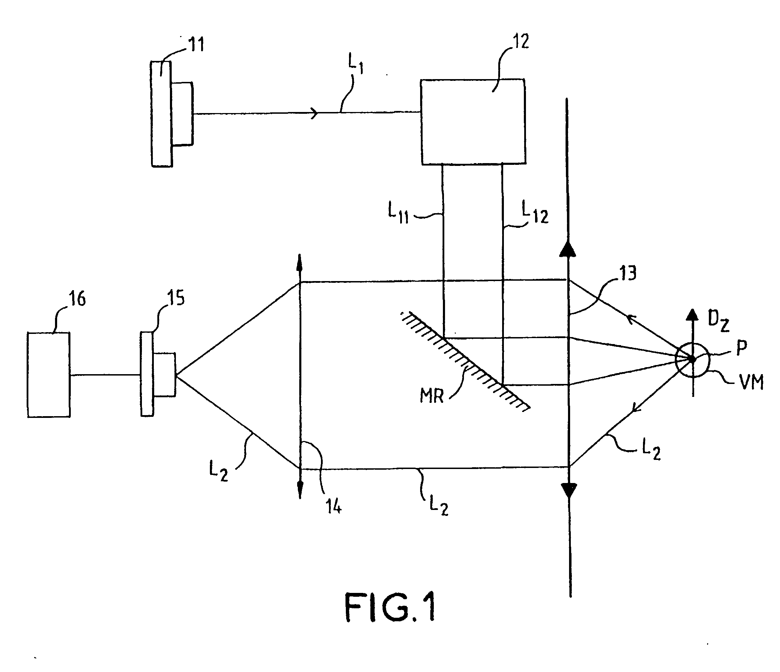

D'autres systèmes optiques connus à ce jour, comprennent des moyens pour faire interférer deux rayonnements incidents au niveau d'un volume de mesure dans lequel passent des particules dont on cherche à mesurer la vitesse. L'énergie rétrodiffusée par les particules est porteuse d'indication concernant la vitesse. L'intérêt de l'interférométrie réside dans le fait qu'il n'est pas nécessaire de disposer de source parfaitement monochromatique. A titre d'exemple la figure 1 illustre un dispositif utilisant ce type d'interférences.

Une source 11 type diode laser, émet un faisceau de lumière $L_1$ en direction d'un séparateur optique 12 capable de générer deux faisceaux de lumière $L_{11}$ et $L_{12}$ en direction d'une optique de renvoi MR de manière à ce que les deux faisceaux $L_{11}$ et $L_{12}$ interfèrent dans le volume de mesure VM, au moyen d'une lentille 13 et créent par la même des franges d'interférences que traverse une particule P passant dans lé volume de mesure selon la direction Dz indiquée sur la figure 1. Ladite particule rétrodiffuse de la lumière, selon le faisceau $L_2$, qui est collimatée au travers de la lentille 13, puis focalisée au travers d'une lentille 14, en direction de moyens de photodétection 15. Les moyens sont couplés à un dispositif de traitement du signal 16, capable d'extraire des informations sur la vitesse de la particule à partir du signal électrique délivré par les moyens de photodétection 15.

Le problème majeur de ce type de sondes à franges classiques réside dans la faible énergie rétrodiffusée par les particules submicroniques, mal adaptée aux sensibilités des photodétecteurs classiques.

C'est pourquoi l'invention propose une sonde optique vélocimétrique comprenant des moyens pour amplifier l'énergie rétrodiffusée.

Plus précisément, l'invention a pour objet une sonde vélocimétrique optique comprenant des moyens pour éclairer par un faisceau de lumière 1, un volume de mesure dans lequel peuvent passer des particules en mouvement relatif par rapport à la sonde et des moyens de détection optique d'un faisceau de lumière 2 comprenant un faisceau 3 de lumière rétrodiffusée par les particules, pour produire un signal électrique en réponse au passage d'une particule dans le volume de mesure (représentatif de la vitesse relative de la particule par rapport à la sonde), caractérisée en ce qu'elle comporte des moyens pour produire des interférences entre un faisceau de lumière de référence 4 issu du faisceau de lumière 1 et le faisceau de lumière 3, lesdites interférences étant comprises dans le faisceau de lumière 2 et les surfaces d'ondes des faisceaux de lumière 3 et 4 étant de même géométrie.

Ce type de sonde est particulièrement bien adapté à des applications aéronautiques, en utilisant la vitesse de particules constitutives d'aérosols atmosphériques.

Elle peut notamment répondre à des besoins dans ce domaine dans la mesure où à l'heure actuelle les dispositifs pour mesurer la vitesse d'un avion comprennent des protubérances disposées à l'avant de l'avion encore dénommées tubes de Pitot déterminant des pressions totales et des pressions statiques. Ce type de dispositif étant placé à l'extérieur de l'avion, doit être en permanence réchauffé pour ne pas geler et fournir des informations fiables, d'autre part il s'agit de protubérances qui augmentent de manière non négligeable la traînée aérodynamique de l'avion, entraînant une surconsommation.

Il est à noter que dans le domaine de l'avionique, des sondes vélocimétriques optiques basées sur l'effet Doppler longitudinal précédemment évoqué ne donneraient pas satisfaction dans la mesure où des dispositifs embarqués ne devraient pas comprendre de sources trop volumineuses, mais plutôt des sources type diode laser de plus faible puissance et présentant des largeurs spectrales d'émission trop larges, peu adaptées aux impératifs liés à l'effet Doppler longitudinal.

Selon une variante de l'invention, la sonde vélocimétrique optique peut comporter des moyens pour rendre les surfaces d'onde des faisceaux 3 et 4 identiques et notamment dans le cas où le faisceau de lumière 1 délivré est parallèle et présente une surface d'onde plane alors que le faisceau de lumière rétrodiffusée 3 est divergent et présente une surface d'onde sphérique.

Selon une variante de l'invention, la sonde vélocimétrique optique peut comporter comme moyens pour produire le faisceau de lumière 1, une source type diode laser délivrant un faisceau de sortie 1, divergent et de section elliptique, celle-ci est avantageusement couplée à un ensemble collimateur/anamorphoseur capable de produire un faisceau lumineux parallèle et de section circulaire.

La sonde vélocimétrique peut comporter également des moyens de déviation du faisceau de lumière 1, de manière à amener au moins une partie de ce faisceau dans la direction du faisceau de lumière 3.

Elle peut comporter des moyens de focalisation des faisceaux de lumière 3 et 4, de manière à faire interférer lesdits faisceaux à proximité des moyens de détection optique.

Selon une variante de l'invention, la sonde vélocimétrique optique comprend des moyens pour déterminer plusieurs composantes spatiales de la vitesse des particules par rapport à la sonde.

Plus précisément il s'agit d'une sonde vélocimétrique caractérisée en ce qu'elle comporte des moyens pour produire alternativement au moins deux faisceaux de lumière 1 et 1' éclairant le volume de mesure selon des incidences différentes, de manière à détecter différentes composantes spatiales de la vitesse relative de la particule par rapport à la sonde.

L'invention sera mieux comprise et d'autres avantages apparaîtront à la lecture de la description qui va suivre donnée à titre non limitatif et grâce aux figures annexées parmi lesquelles:

- la figure 1 illustre une sonde vélocimétrique optique selon l'art connu ;
- la figure 2 illustre un exemple de réalisation de sonde optique selon l'invention ;
- la figure 3 illustre le volume de mesuré $VM_1$ irradié par le faisceau de lumière 1 ;
- la figure 4 illustre un exemple de sonde vélocimétrique selon l'invention utilisant un miroir amovible de manière à créer deux faisceaux de lumière incidents 1 et 1' au niveau du volume de mesure.

De manière générale, la sonde vélocimétrique optique selon l'invention comprend essentiellement trois parties:

- une première partie que l'on peut dénommer voie émission 1, issue des moyens pour éclairer par un faisceau de lumière, un volume de mesure ;
- une seconde partie notée voie référence constitutive du faisceau de lumière 4;
- une troisième partie qui recueille l'énergie rétrodiffusée par des particules traversant le volume de mesure et qui la focalise à proximité des moyens de détection optique, où cette énergie vient interférer avec la voie référence ; cette dernière partie étant dénommée voie réception.

Nous allons décrire les différentes voies émission, référence et réception dans un exemple de réalisation selon l'invention de manière à mettre en évidence les différentes caractéristiques de l'invention. Il s'agit d'une sonde vélocimétrique optique adaptée à des applications aéronautiques pouvant être _embarquées à bord d'un aéronef, permettant d'estimer précisément la vitesse de l'aéronef, en estimant la vitesse relative de particules d'aérosols atmosphériques par rapport audit aéronef.

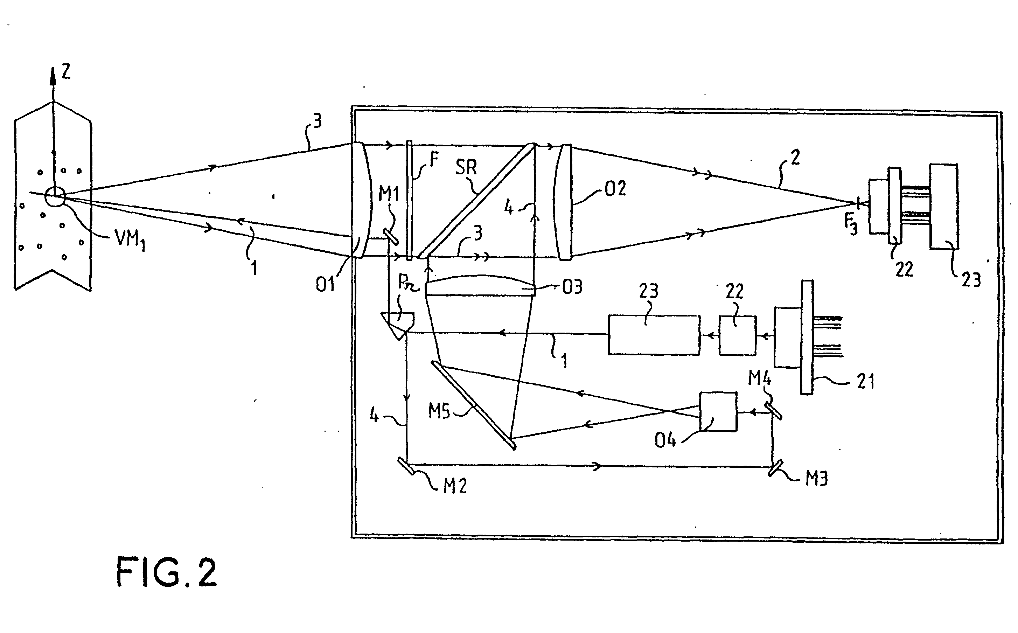

La figure 2 illustre l'ensemble de la sonde embarquée dans lequel la première partie dénommée voie émission crée un volume de mesure à l'extérieur de la sonde à une distance pouvant typiquement être de l'ordre de 100 mm. Cette voie émission comprend :

- une diode laser 21, monomode transverse et longitudinale de forte puissance, supérieure à environ 100 mW, qui délivre le faisceau de lumière 1 ;
- un ensemble optique composé d'un collimateur 22 et d'un anamorphoseur 23. Le collimateur permet de transformer le faisceau de lumière divergent délivré par la diode laser en un faisceau de lumière parallèle. L'anamorphoseur permet quant à lui de changer la section elliptique dudit faisceau en section circulaire de petit diamètre, de l'ordre du millimètre ;
- des moyens de déviation comprenant un prisme Pr et un miroir $M_1$;
- une optique d'émission 01, qui focalise le faisceau 1 à son foyer. On crée ainsi le volume de mesure dont les caractéristiques sont les suivantes.
  Distance de la lentille d'émission 01 : 100 mm
  Diamètre à la distance $1/e^2$ : 100 μm
  Incidence/Axe optique : 100 mrad
  Géométrie de la surface d'onde : plane
  La voie référence comprend :

- une partie commune avec la voie émission, composée de la diode laser, du collimateur et de l'anamorphoseur ;
- à partir du prisme $P_r$, la voie émission et la voie référence se séparent. La quasi-totalité de l'énergie (environ 96 %) est transmise vers la voie émission. La partie restante 3 de l'énergie (environ 4 %) est réfléchie vers la voie référence. Il est important de ne pas envoyer en direction des moyens de détection optique, des énergies trop importantes capables de saturer lesdits moyens de détection;
- le faisceau réfléchi 3 est dévié par des miroirs $M_2$, $M_3$, $M_4$ et $M_5$, de façon à replier le faisceau de lumière 4 et à égaliser les trajets optiques des faisceaux de lumière 3 et 4 sur les voies référence et réception ;

- des moyens afocaux composés des optiques 03 et 04 permettent de créer une onde plane de dimension importante dont les caractéristiques géométriques sont identiques à celles du faisceau 3 après traversée de l'optique 01.
- une lame semi-réfléchissante SR à faible coefficient de réflexion (environ 4 %) permet de superposer la voie référence et la voie réception, soit encore les faisceaux 4 et 3 ;
- une lentille de focalisation 02 focalise le faisceau 4 de référence à une courte distance des moyens de détection en l'occurrence une photodiode 22. Cette courte distance peut typiquement être voisine de 2 mm. Il y a ainsi adaptation de la surface utile de la photodiode avec la section du faisceau de lumière 4.

La voie réception comprend essentiellement, sur le trajet du faisceau de lumière rétrodiffusée 3:

- la lentille 01 commune avec la voie émission qui permet de transformer la surface d'onde sphérique du faisceau de lumière diffusée par l'aérosol, en surface d'onde plane ;
- un filtre optique F à bande étroite (de type filtre solaire) ;
- la lentille de focalisation 02 et la photodiode 22, communes à la voie référence ;
- des moyens embarqués 23 de traitement du signal, de manière à fournir les indications de vitesse recherchée.

Selon une autre variante de l'invention, on prévoit des moyens permettant d'illuminer une particule animée d'une vitesse $\bar{v}$ par rapport à la sonde, par plusieurs faisceaux de lumière d'incidences différentes.

En utilisant au moins deux faisceaux adressés l'un après l'autre, on peut mesurer deux composantes de la vitesse se trouvant dans le plan défini par les deux faisceaux de lumière.

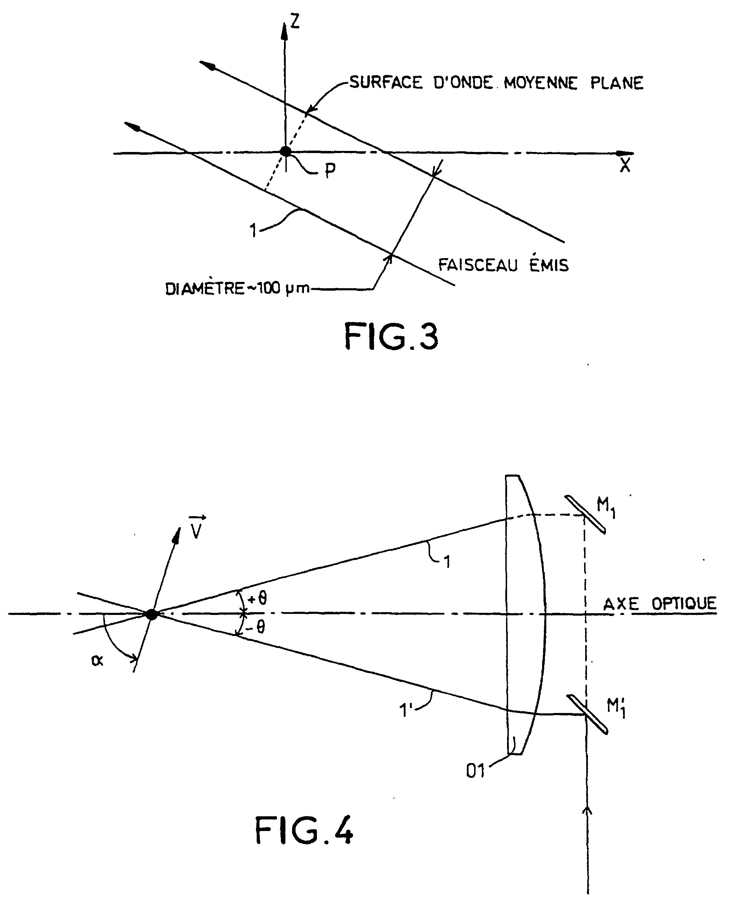

La figure 4 illustre un exemple dans lequel le miroir $M_1$ précédemment décrit est couplé à un miroir $M'_1$, à proximité de l'optique 01. Le miroir $M_1$ est escamoté de façon périodique permettant de générer à l'extérieur de la sonde soit le faisceau 1 soit le faisceau 1'. Le premier faisceau est incliné par rapport à l'axe optique d'un angle $+\theta$ et le second faisceau est incliné par rapport à l'axe optique d'un angle $-\theta$.

Lorsqu'une particule traverse le volume de mesure créé par l'un des deux faisceaux avec une vitesse v et une incidence $\alpha$ par rapport à l'axe optique, le signal optique généré est modulé à l'une des fréquences $f_1$ ou $f_2$ dont les valeurs sont respectivement:

$$f_1 = 1/\lambda . v \sin\left(\frac{\pi}{2} - \alpha - \theta\right) \text{ pour le faisceau 1}$$

$$f_2 = 1/\lambda . v \sin\left(\frac{\pi}{2} - \alpha + \theta\right) \text{ pour le faisceau 1'}$$

A partir de la détermination des fréquences $f_1$ et $f_2$ on peut calculer v et $\alpha$.

Pour les valeurs de $\alpha$ valant $\pi/2-\theta$ et $\pi/2+\theta$, une des deux fréquences s'annulent, ce qui complique la mesure. Pour pallier cet inconvénient, on peut créer un troisième faisceau de lumière, par exemple sur l'axe optique de telle sorte que quelle soit l'incidence au moins deux fréquences soient non nulles.

Pour mesurer trois composantes de la vitesse, la sonde vélocimétrique de l'invention comprend des moyens pour générer trois faisceaux non situés dans le même plan et qui sont adressés successivement.

Ainsi, lorsqu'une particule traverse le volume de mesure généré, par l'un des trois faisceaux, elle va créer un signal modulé à une fréquence dépendant de l'inclinaison du faisceau sur l'axe optique et des composantes de la vitesse. La connaissance des trois fréquences liées aux trois faisceaux permet la détermination des trois composantes de la vitesse.

Nous allons décrire dans le paragraphe suivant, le fonctionnement de ce type de sonde vélocimétrique optique.

Lorsque des particules et notamment des particules constitutives d'un aérosol atmosphérique, ayant des dimensions très inférieures à la longueur d'onde d'un rayonnement lumineux qui les irradient, traversent le volume de mesure $VM_1$, ces particules diffusent une onde sphérique dont l'amplitude complexe peut s'écrire:

$$A_d = A_e \, r.e^{\,j2\pi\left[\Delta_O + z\sin\theta\right]/\lambda}$$

avec

$A_e$ : amplitude de l'onde d'émission
r : coefficient de rétrodiffusion en amplitude de la particule
$\lambda$ : longueur d'onde émise
z : position de la particule suivant l'axe z telle que décrite en figure 2.

La figure 3 illustre le faisceau 1 émis en direction du volume de mesure $VM_1$ dans lequel transitent des particules P.

$\theta$ : inclinaison du faisceau d'émission sur l'axe optique
$\Delta_O$ : trajet optique de la source jusqu'au volume de mesure.

Après traversée des optiques 01 et 02, l'onde sphérique relative au faisceau de lumière 3, va se focaliser dans le plan focal de la lentille 02. L'amplitude de cette onde peut s'écrire en négligeant les transmissions optiques:

$$A'_d = A_d e^{j2\pi\Delta_1/\lambda}$$

avec $\Delta_1$ distance optique séparant le volume de mesure et le plan de focalisation de l'optique 02.
Soit encore:

$$A'_d = A_e \, r \, e^{\,j2\pi\left[\Delta_0 + \Delta_1 + z\sin\theta\right]/\lambda}$$

La voie référence génère une onde sphérique relative au faisceau de lumière 4 dont l'amplitude peut être notée:

$$A_r = A_{ro} e^{j2\pi\Delta_2/\lambda}$$

Ainsi au niveau de la photodiode 22, les ondes $A'_d$ et $A_r$ interfèrent en présentant des surfaces d'onde sphériques la partie variable du phénomène d'interférence vaut:

$$A = 2r A_e A_{ro} \cos \left(2\pi[(\Delta_0 + \Delta_1 - \Delta_2) + z\sin\theta]/\lambda\right)$$

Si les chemins optiques sont équilibrés entre les voies référence et réception, on a :

$$\Delta_0 + \Delta_1 - \Delta_2 = 0$$

et

$$A = 2r \, A_e \, A_{ro} \cos (2\pi z.\sin\theta/\lambda)$$

Si la particule traverse le volume de mesure à la vitesse v, on peut également écrire :

avec z = vt
$A = 2r.A_e.A_{ro}.\cos (2\pi v.t.\sin\theta/\lambda)$

On obtient ainsi un signal temporel modulé à la fréquence :

$$f = v\,\sin\theta/\lambda$$

Avec une sonde à franges classiques, telle que celle décrite en figure 1, dans laquelle on fait interférer deux faisceaux incidents dans le volume de mesure traversé par une particule, l'amplitude de la partie variable du phénomène d'interférence peut s'écrire:

$$AF = 2r^2\,A_e^2.\cos\,(2\pi\,vt/\lambda)$$

Le gain d'amplification entre la sonde de l'art connu et la sonde de l'invention est donc :

$$G = A/A_F = r.A_e.A_{ro}/r^2\,A_{e\,2} = A_{ro}/rAe=[I_R/R\,I_e]^{1/2}$$

Si $I_R$ est l'intensité du faisceau référencé $I_R=A^2ro$
$I_e$ est l'intensité du faisceau émis $Ie=Ae^2$
R est le coefficient de réflexion en intensité de la particule $R=r^2$
De manière classique $I_e$ est de l'ordre de $10^{-1}$ W
$I_R$ est de l'ordre de $10^{-4}$ W
pour une valeur R de l'ordre de $10^{-7}$.

$$F\simeq[10^{-4}/10^{-1} \times 10^{-7}]^{1/2} \sim 100$$

## Revendications

1. Sonde. vélocimétrique optique comprenant des moyens pour éclairer par un premier faisceau de lumière (1) un volume de mesure dans lequel peuvent passer des particules en mouvement relatif par rapport à la sonde et des moyens de détection optique d'un faisceau de lumière (2), pour produire un signal modulé en amplitude à une fréquence fixe, comprenant un faisceau de lumière (3) rétrodiffusée par les particules, pour produire un signal électrique en réponse au passage d'une particule dans le volume de mesure représentatif de la vitesse relative de la particule par rapport à la sonde, **caractérisée en ce qu'**elle comporte des moyens pour produire des interférences entre un faisceau de lumière de référence (4) issu du premier faisceau de lumière (1) et le faisceau de lumière rétrodiffusée (3), lesdites interférences étant comprises dans le faisceau de lumière détectée (2) et les surfaces d'ondes des faisceaux de lumière rétrodiffusée (3) et de référence (4) étant de même géométrie.

2. Sonde vélocimétrique selon la revendication 1, **caractérisée en ce qu'**elle comporte des moyens pour rendre les géométries des surfaces d'ondes des faisceaux de lumière rétrodiffusée (3) et de référence (4) identiques.

3. Sonde vélocimétrique selon l'une des revendications 1 ou 2, **caractérisée en ce qu'**elle comporte des moyens pour dévier une partie au moins (4) du premier faisceau de lumière (1) dans la même direction que la direction du faisceau de lumière rétrodiffusée (3).

4. Sonde vélocimétrique selon la revendication 3, **caractérisée en ce qu'**elle comporte un prisme (pr) pour dévier une partie (4) du premier faisceau de lumière (1).

5. Sonde vélocimétrique selon l'une des revendications 1 à 4, **caractérisée en ce qu'**elle comporte des moyens pour égaliser les trajets optiques de faisceaux de lumière rétrodiffusée (3) et de référence (4) entre les moyens d'éclairement et les moyens de détection optique.

6. Sonde vélocimétrique selon l'une des revendications 1 à 5, **caractérisée en ce qu'**elle comporte des moyens pour produire alternativement au moins deux premiers faisceux de lumière (1, 1') éclairant le volume de mesure selon des incidences différentes, de manière à détecter différentes composantes spatiales de la vitesse relative de la particule par rapport à la sonde.

7. Sonde vélocimétrique selon la revendication 6, **caractérisée en ce que** les moyens pour produire le deux premiers faisceaux de lumière (1, 1') sont créés à partir d'une source unique d'éclairement et que lesdits moyens comprennent au moins un miroir amovible (M'$_1$) sur le trajet desdits faisceaux de lumière.

## Patentansprüche

1. Optische Geschwindigkeitsmeßsonde mit Mitteln, um durch einen ersten Lichtstrahl (1) ein Meßvolumen zu beleuchten, durch das Partikel mit einer Relativgeschwindigkeit bezüglich der Sonde strömen, und mit Mitteln zur optischen Erfassung eines Lichtstrahls (2), um ein mit fester Frequenz amplitudenmoduliertes Signal zu erzeugen, mit einem von den Partikeln rückgestreuten Lichtstrahl (3) zur Erzeugung eines elektrischen Signals aufgrund des Durchgangs eines Partikels durch das Meßvolumen, wobei dieses Signal für die relative Geschwindigkeit des Partikels bezüglich der Sonde repräsentativ ist, **dadurch gekennzeichnet, daß** die Sonde Mittel enthält, um Interferenzen zwischen einem Bezugslichtstrahl (4), der vom ersten Lichtstrahl (1) abgeleitet ist, und dem rückgestreuten Lichtstrahl (3) zu erzeugen, wobei diese Interferenzen im erfaßten Lichtstrahl (2) enthalten sind und die Wellenfronten des rückgestreuten Lichtstrahls (3) und des Bezugslichtstrahls (4) gleiche Geometrien besitzen.

2. Geschwindigkeitsmeßsonde nach Anspruch 1, **dadurch gekennzeichnet, daß** sie Mittel besitzt, um die Geometrie der Wellenfronten des rückdiffundierten Lichtstrahls (3) und des Bezugslichtstrahls (4) einander anzugleichen.

3. Geschwindigkeitsmeßsonde nach einem der Ansprüche 1 und 2, **dadurch gekennzeichnet, daß** sie Mittel besitzt, um mindestens einen Teil (4) des ersten Lichtstrahls (1) in derselben Richtung wie die des rückdiffundierten Lichtstrahls (3) abzulenken.

4. Geschwindigkeitsmeßsonde nach Anspruch 3, **dadurch gekennzeichnet, daß** sie ein Prisma (Pr) zur Ablenkung eines Teils (4) des ersten Lichtstrahls (1) besitzt.

5. Geschwindigkeitsmeßsonde nach einem der Ansprüche 1 bis 4, **dadurch gekennzeichnet, daß** sie Mittel aufweist, um die optischen Pfade des rückdiffundierten Lichtstrahls (3) und des Bezugslichtstrahls (4) zwischen den Mitteln zur Beleuchtung des Meßvolumens und den Mitteln zur optischen Erfassung einander anzugleichen.

6. Geschwindigkeitsmeßsonde nach einem der Ansprüche 1 bis 5, **dadurch gekennzeichnet, daß** sie Mittel besitzt, um abwechselnd einen von mindestens zwei ersten Lichtstrahlen (1, 1') zu erzeugen, die das Meßvolumen gemäß unterschiedlichen Einfallswinkeln beleuchten, sodaß verschiedene räumliche Komponenten der Relativgeschwindigkeit des Partikels bezüglich der Sonde erfaßt werden.

7. Geschwindigkeitsmeßsonde nach Anspruch 6, **dadurch gekennzeichnet, daß** die Mittel zur Erzeugung der beiden ersten Lichtstrahlen (1, 1') von einer gemeinsamen Beleuchtungsquelle gebildet werden und daß diese Mittel mindestens einen wegschwenkbaren Spiegel (M'$_1$) im Verlauf dieser Lichtstrahlen aufweisen.

## Claims

1. Optical velocimetric probe comprising means for illuminating, with a first light beam (1), a measurement volume through which particles can pass which are in relative motion with respect to the probe, and means for optical detection of a light beam (2) in order to produce an amplitude-modulated signal at a fixed frequency, comprising a light beam (3) back-scattered by the particles, in order to produce an electrical signal in response to the passage of a particle through the measurement volume representative of the relative velocity of the particle with respect to the probe, **characterized in that** it includes means for producing interference between a reference light beam (4) derived from the first light beam (1) and the back-scattered light beam (3), the said interference being contained in the detected light beam (2) and the wavefronts of the back-scattered light beam (3) and the reference beam (4) being of the same geometry.

2. Velocimetric probe according to Claim 1, **characterized in that** it includes means for making the geometries of the wavefronts of the back-scattered light beam (3) and the reference beam (4) identical.

3. Velocimetric probe according to one of Claims 1 and 2, **characterized in that** it includes means for deviating at least a part (4) of the first light beam (1) in the same direction as the direction of the back-scattered light beam (3).

4. Velocimetric probe according to Claim 3, **characterized in that** it includes a prism (pr) for deviating a part (4) of the first light beam (1).

5. Velocimetric probe according to one of Claims 1 to 4, **characterized in that** it includes means for equalizing the optical paths of the back-scattered light beam (3) and the reference beam (4) between the illumination means and the optical detection means.

6. Velocimetric probe according to one of Claims 1 to 5, **characterized in that** it includes means for alternately producing at least two first light beams (1, 1') illuminating the measurement volume at different incidences, so as to detect different spatial components of the relative velocity of the particle with respect to the probe.

7. Velocimetric probe according to Claim 6, **characterized in that** the means for producing the two first light beams (1, 1') are created from a single illumination source, and **in that** the said means comprise at least one removable mirror ($M'_1$) on the path of the said light beams.

FIG.1

EP 0 846 274 B1

FIG.2

FIG.3

FIG.4